# EUROPÄISCHE PATENTSCHRIFT

(11) **EP 3 511 139 B1**
(45) Veröffentlichungstag und Bekanntmachung des Hinweises auf die Patenterteilung: **31.08.2022**
(21) Anmeldenummer: 18151470.4
(22) Anmeldetag: 12.01.2018
(51) Int. Cl.: B29B 9/06, B29C 48/00, B29C 48/05, B29C 48/255, B29C 48/30, B29C 48/345

(54) **DÜSENANORDNUNG FÜR EINE GRANULIERVORRICHTUNG, GRANULIERVORRICHTUNG SOWIE DARAUF BEZOGENES VERFAHREN**
NOZZLE ASSEMBLY FOR GRANULATING DEVICE, GRANULATION DEVICE, AND RELATED METHOD
DISPOSITIF DE BUSE POUR DISPOSITIF DE GRANULATION, DISPOSITIF DE GRANULATION, ET PROCÉDÉ ASSOCIÉ

(43) Veröffentlichungstag der Anmeldung: 17.07.2019
(73) Patentinhaber: Nordson Corporation, Westlake, OH 44145 (US)
(72) Erfinder: Schnellbach, Nikolai, 48308 Senden (DE); El Jouhari, Kamal, 48159 Münster (DE); Baklashov, Anatoly, 48163 Münster (DE); Schlief, Dirk, 48249 Dülmen (DE)
(74) Vertreter: Eisenführ Speiser

(56) Entgegenhaltungen:
- EP-A1- 1 607 200
- WO-A1-2016/043694
- DE-A1- 19 720 722
- DE-C1- 4 408 235
- US-A1- 2007 264 379
- US-A1- 2014 328 961
- US-A1- 2017 305 026

## Beschreibung

Die Erfindung betrifft eine Düsenanordnung für eine Granuliervorrichtung mit einem Düsenkörper mit einer Eintrittsseite sowie einer Austrittsseite, einer an der Austrittsseite angeordneten Düsenplatte mit Düsenlöchern zur Ausbildung von Schmelzesträngen und in dem Düsenkörper ausgebildeten und mit der Eintrittsseite und der Austrittsseite fluidleitend verbundenen Strömungskanälen zum Zuführen eines Schmelzeflusses zu einer Düsenplatte, eine darauf bezogene Granuliervorrichtung und ein darauf bezogenes Verfahren zum Separieren eines Schmelzeflusses in Schmelzestränge.

Derartige Düsenanordnungen sind im Stand der Technik bekannt und finden beispielsweise bei Granuliervorrichtungen Verwendung. Sie werden dazu eingesetzt, geschmolzenes Granuliermaterial, wie beispielsweise thermoplastische Kunststoffe, mittels einer Düsenplatte in die Form von zumeist mehreren Schmelzesträngen zu extrudieren. Im Rahmen des Verfahrens der sogenannten Unterwassergranulierung werden die einzelnen Schmelzestränge anschließend mittels einer Schneidvorrichtung in Strangabschnitte unterteilt, welche, wenn sie mit einem Kühlfluid, beispielsweise Wasser, in Kontakt treten, abgekühlt werden und somit die gewünschten Granulate bzw. Granulatkörner bilden. Das Verfahren der Unterwassergranulierung ermöglicht einen hohen Granulierungsmaterialdurchsatz bei geringem erforderlichem Bauraum einer solchen Vorrichtung und bei geringen Emissionen in Form von Staub oder Lärm. Beispielsweise betrifft DE 197 20 722 A1 ein Unterwassergranulierverfahren und einen Unterwassergranulierstempel, in dem thermoplastisches Kunstharz geknetet, geschmolzen und durch einen Knetextruder des Schraubentyps extrudiert wird. Aus US 2007/264379 A1 ist ebenfalls eine Unterwassergranuliervorrichtung bekannt.

Bei den im Stand der Technik vorbekannten Düsenanordnungen wird Schmelze an einer Eintrittsseite in einen Düsenkörper geleitet. Mittels einer Vielzahl von Strömungskanälen wird die Schmelze durch den Düsenkörper geführt und gelangt zu einer Düsenplatte. Die Düsenplatte weist typischerweise eine Vielzahl von Düsenlöchern auf, um eine hohe Produktivität und in Abhängigkeit von der zu verarbeitenden Schmelze ein gewünschtes Granulierungsergebnis zu erzielen, beispielsweise hohe Durchsätze bei vergleichsweise kleiner Lochplatte oder besonders kleine Granulatkörner bei einem gegebenen Durchsatz. Da bei den im Stand der Technik vorbekannten Düsenanordnungen eine diskrete Anzahl von Strömungskanälen in den Düsenkörpern ausgebildet ist, ist bei Gestaltung der Düsenplatte auf die Anordnung dieser Strömungskanäle Rücksicht zu nehmen. So ist sicherzustellen, dass die Düsenlöcher der Düsenplatte gleichmäßig mit Schmelze versorgt werden. Naturgemäß führt die Anordnung einzelner Strömungskanäle dazu, dass diese voneinander durch Gehäuseabschnitte beabstandet sind. Die Düsenlöcher der Düsenplatten können daher nur in begrenzten Bereichen auf den Düsenplatten angeordnet werden, nämlich insbesondere in solchen, die mit den Auslässen der Strömungskanäle korrespondieren.

Insgesamt wirkt sich dieses nachteilig auf den insgesamt erreichbaren Material- bzw. Schmelzedurchsatz aus, und auch der Form, Anzahl und Positionierung der Düsenlöcher sind hierdurch enge Gestaltungsgrenzen gesetzt. Die Auslegung einer solchen Düsenplatte lässt sich unter Umständen nicht optimal an die nachgelagerte Schneidvorrichtung, die dem Zerteilen der Schmelzestränge dient, anpassen. Ein weiterer Nachteil der aus dem Stand der Technik vorbekannten Düsenanordnungen tritt insbesondere dann zu Tage, wenn unterschiedliche Eigenschaften, beispielsweise Viskositäten oder Dichten aufweisende Schmelzen bzw. Materialien mit einer Düsenanordnung verarbeitet werden sollen. Jedes Material bzw. jede Schmelze ist typischerweise mit vorteilhaften Prozessparametern wie beispielsweise einem vorgegebenen Verarbeitungsdruck zu verarbeiten, um sicherzustellen, dass die Schmelzestränge auf eine gewünschte, beispielsweise gleichmäßige Weise aus der Düsenplatte austreten. Bei aus dem Stand der Technik vorbekannten Düsenanordnungen führen Materialwechsel typischerweise dazu, dass die vollständige Düsenanordnung ausgetauscht wird und für jedes zu verarbeitende Material oder zumindest für Materialgruppen unterschiedliche Düsenanordnungen bereitgehalten werden. Sollen unterschiedliche Materialien verarbeitet werden, so ergibt sich hierdurch eine hohe Kapitalbindung, da eine Vielzahl von Düsenanordnungen vorgehalten werden müssen. Darüber hinaus gestaltet sich der Austausch einer Düsenanordnung zeitaufwendig.

Ergänzend wird noch auf die Offenbarung der WO 2016/043694 A1 hingewiesen; diese zeigt zwar ein Strömungsquerschnittsregulierelement, welches allerdings nicht als Ringelement ausgebildet ist. Darüber hinaus offenbart diese Schrift auch nicht, dass der wenigstens eine zumindest abschnittsweise im Düsenkörper ausgebildete ringförmige Verbindungskanal, welcher mehrere Strömungskanäle austrittsseitig fluidleitend verbindet, fluidleitend mit den Düsenlöchern der Düsenplatte verbunden ist.

Vor diesem Hintergrund lag der Erfindung die Aufgabe zugrunde, eine Düsenanordnung der eingangs bezeichneten Art dahingehend weiterzubilden, dass die im Stand der Technik aufgefundenen Nachteile möglichst weitgehend behoben werden. Insbesondere war eine Düsenanordnung anzugeben, welche die Zufuhr von Schmelze zu einer Düsenplatte verbessert und welche mit einer Vielzahl von unterschiedlichen Materialien bzw. Schmelzen betreibbar ist.

Erfindungsgemäß wird die Aufgabe bei einer Düsenanordnung der eingangs genannten Art durch die kennzeichnenden Merkmale des Anspruchs 1 gelöst.

Die Erfindung macht sich die Erkenntnis zunutze, dass Schmelze mittels eines ringförmigen Verbindungskanals, welcher mehrere Strömungskanäle fluidleitend verbindet, einer Düsenplatte gleichmäßiger zugeführt werden kann und ein Druckausgleich zwischen Strömungskanälen ermöglicht wird. Dieses ermöglicht es, die Austrittsöffnungen einer an dem Düsenkörper angeordneten Düsenplatte hinsichtlich Form, Anzahl und Positionierung flexibler ausgestalten zu können. Dadurch, dass die Schmelze der Düsenplatte durch den ringförmigen Verbindungskanal nicht nur punktuell, etwa durch einzelne Strömungskanäle, sondern großflächig in einem durch den Ringkanal definierten Bereich zugeführt wird, lässt sich die durch die Düsenlöcher definierte offene Austrittsfläche der Düsenplatte maximieren. Insgesamt lässt sich die Düsenplatte damit besser an die zu verarbeitenden Materialien anpassen und es lässt sich ferner der Produktdurchsatz z. B. durch Erhöhung der Lochanzahl steigern und die Qualität der Granulate vereinheitlichen. Abschnittsweise ist vorliegend zu verstehen, als dass mindestens ein Teilbereich der Umwandung des Verbindungskanals in dem Düsenkörper ausgebildet ist. Die übrigen Bereiche der Umwandung des Verbindungskanals können beispielsweise auch durch hierzu vorgesehene Bauteile bereitgestellt werden. Eine Ausbildung des Verbindungskanals zumindest abschnittsweise in dem Düsenkörper bringt den Vorteil mit sich, dass die Anzahl der verwendeten Bauteile hierdurch geringer gehalten werden kann, welches insgesamt eine schnelle Montierbarkeit der Düsenanordnung fördert.

Mittels des Strömungsquerschnittsregulierelements lassen sich die Strömungsverhältnisse in dem Strömungskanal zielgerichtet beeinflussen. Dieses ist insbesondere dann vorteilhaft, wenn mit einer Düsenanordnung eine Vielzahl von verschiedenen Materialien bzw. Schmelzen verarbeitet werden soll. Mittels einer zielgerichteten Auswahl eines solchen separaten Strömungsquerschnittsregulierelements lassen sich die Strömungs- und Druckverhältnisse in dem Strömungskanal und insbesondere an der Düsenplatte wie gewünscht beeinflussen. Eine Düsenanordnung, welche für eine Vielzahl von zu verarbeitenden Materialien verwendbar ist, erzielt Kostenvorteile gegenüber Lösungen, bei welchen bei jedem Materialwechsel die vollständige Düsenanordnung auszutauschen ist. Auch lassen sich Umbau- bzw. Rüstzeiten reduzieren, da der Austausch eines solchen Strömungsquerschnittsregulierelements typischerweise deutlich schneller vornehmbar ist als der Austausch einer vollständigen Düsenanordnung.

Eine Ausgestaltung des Strömungsquerschnittsregulierelements als Ringelement hat sich als besonders vorteilhaft bezüglich einer zielgerichteten Beeinflussung des Strömungsquerschnitts sowie mittelbar des Schmelzedrucks gezeigt. Die Ringelemente sind insgesamt kostengünstig herstellbar und auf den gewünschten Verwendungszweck (Material- bzw. Schmelzetyp) anpassbar.

Bevorzugt weist der Verbindungskanal einen im Wesentlichen runden Querschnitt auf. Ein solcher runder Querschnitt hat sich als besonders vorteilhaft in Bezug auf die Möglichkeit zum Fluidaustausch und Druckausgleich zwischen mehreren Strömungskanälen erwiesen. Der Querschnitt fördert insbesondere eine gleichmäßige Schmelzeausbreitung entlang des ringförmigen Verbindungskanals.

Die Düsenanordnung ist vorzugsweise derart ausgebildet, dass der Durchmesser des Verbindungskanals mit einem Düsenlochkreisdurchmesser der Düsenplatte korrespondiert. Damit wird insbesondere ermöglicht, die Düsenlöcher der Düsenplatte nicht nur unmittelbar in jenem Bereich anordnen zu können, in welchem etwa Strömungskanäle in Richtung der Düsenplatte geöffnet sind, sondern vielmehr in einem größerflächigen, insbesondere ringförmigen Bereich, wodurch Formen, Anzahl und Positionen der Düsenlöcher deutlich freier gewählt werden können. Gemäß einer weiteren bevorzugten Ausführungsform ist der ringförmige Verbindungskanal dazu eingerichtet, einen Fluidaustausch in einer Ebene parallel zur Grundebene der Düsenplatte zu ermöglichen. Auch ist ferner bevorzugt, dass die Strömungskanäle auf einem Kreis bzw. Teilkreis angeordnet sind, dessen Mittelpunkt mit einer Längsachse der Düsenanordnung korrespondiert.

Gemäß einer alternativen Ausführungsform ist bevorzugt, dass das Strömungsquerschnittsregulierelement einstückig an der Düsenplatte ausgebildet ist. Die Anzahl der zu verwendenden Bauteile kann somit reduziert werden.

Alternativ ist bevorzugt, dass das Strömungsquerschnittsregulierelement als separates Bauteil ausgebildet ist. Die Düsenanordnung ist ferner vorzugsweise derart ausgebildet, dass das Strömungsquerschnittsregulierelement austauschbar in dem Strömungskanal angeordnet ist. Eine solche austauschbare Anordnung ermöglicht einen schnell vorzunehmenden und einfach auszuführenden Wechsel des Strömungsquerschnittsregulierelements insbesondere dann, wenn ein anderer Schmelzentyp bzw. Materialtyp mit einer Düsenanordnung verarbeitet werden soll, und beispielsweise Druckverhältnisse verändert werden sollen.

Weiterhin ist bevorzugt, dass das Strömungsquerschnittsregulierelement wenigstens teilweise in oder angrenzend zu dem Verbindungskanal angeordnet ist. Hierbei hat es sich als vorteilhaft erwiesen, den Strömungsquerschnitt und damit mittelbar den Schmelzedruck möglichst nahe an der Düsenplatte zu beeinflussen. Bei Verwendung einer Düsenanordnung mit Verbindungskanal ist es somit besonders vorteilhaft, den Strömungsquerschnitt bzw. Schmelzedruck unmittelbar an dem benachbart zur Düsenplatte angeordneten Verbindungskanal anzuordnen bzw. anzupassen.

Gemäß einer weiteren bevorzugten Weiterbildung wird das Strömungsquerschnittsregulierelement durch die Düsenplatte in seiner Position gehalten und ist nach dem Entfernen der Düsenplatte zugänglich. Da bei einem Material- bzw. Schmelzewechsel häufig auch die Düsenplatte auszutauschen ist, unterstützt ein solcher konstruktiver Aufbau eine Reduzierung der Umrüstzeiten, da das Strömungsquerschnittsregulierelement nach dem ohnehin oft obligatorischen Entfernen der Düsenplatte unmittelbar zugänglich wird und sodann leicht austauschbar ist.

Die Erfindung wird dadurch weitergebildet, dass an dem Strömungsquerschnittsregulierelement eine Staukante ausgebildet ist. Eine solche Staukante hat sich zur Beeinflussung des freien Strömungsquerschnitts bzw. zur Beeinflussung der Druckverhältnisse im Bereich der Düsenplatte als besonders geeignet erwiesen. Ein solcher erhöhter Staudruck führt zu einer gleichmäßigeren Schmelzeverteilung z.B. auch bei ungleichmäßiger Beheizung der Lochplatte.

Gemäß einer bevorzugten Weiterbildung ist an dem Strömungsquerschnittsregulierelement zumindest ein Abschnitt des Verbindungskanals ausgebildet. Der Verbindungskanal kann somit beispielsweise mittels eines Wandabschnitts, welcher an dem Düsenkörper ausgebildet ist, sowie mittels eines Wandabschnitts, welcher an dem Strömungsquerschnittsregulierelement ausgebildet ist, definiert sein. Auch hier wird das Ziel verfolgt, die Gesamtanzahl der erforderlichen Bauteile insgesamt zu reduzieren und gleichzeitig sicherzustellen, dass der Verbindungskanal, beispielsweise durch Entfernen des Strömungsquerschnittsregulierelement, zugänglich und wartbar bleibt.

Weiterhin wird bevorzugt, dass die Düsenanordnung einen Verteilerring aufweist, welcher zwischen der Düsenplatte und dem Strömungsquerschnittsregulierelement angeordnet ist und an welchem vorzugsweise ein Abschnitt des Verbindungskanals ausgebildet ist. Vorliegend wird der Strömungskanal somit durch Wandabschnitte begrenzt, die insgesamt drei Bauteilen zugeordnet sind, nämlich dem Düsenkörper, dem Strömungsquerschnittsregulierelement sowie einem Verteilerring. Insgesamt ergeben sich hierdurch Vorteile bezüglich eines modularisierten Aufbaus einer solchen Düsenanordnung.

Die Erfindung wird dadurch weitergebildet, dass das Strömungsquerschnittsregulierelement einen konischen Abschnitt zur Begrenzung des Strömungskanals aufweist. Zusätzlich oder alternativ weist das Strömungsquerschnittsregulierelement ferner einen gewölbten Abschnitt zur Begrenzung des Strömungskanals auf. Diese unterschiedlichen Ausgestaltungen des Strömungsquerschnittsregulierelement dienen im Wesentlichen einer zielgerichteten Beeinflussung des freien Strömungsquerschnitts und damit einer zielgerichteten Beeinflussung des Material- bzw. Schmelzedrucks in Abhängigkeit von dem zu verarbeitenden Material. Beispielsweise kann für die Verarbeitung eines ersten Materials ein Strömungsquerschnittsregulierelement vorteilhaft sein, welches einen konischen Abschnitt zur Begrenzung des Strömungskanals aufweist, wohingegen bei Verwendung eines zweiten Materials die Verwendung eines Strömungsquerschnittsregulierelement mit einem konkaven Abschnitt zur Begrenzung des Strömungskanals vorteilhaft sein kann. Darüber hinaus kommt auch eine Kombination der genannten Formen in Abhängigkeit insbesondere des zu verarbeitenden Materials in Frage.

Gemäß einer alternativen Ausführungsform ist das Strömungsquerschnittsregulierelement als perforiertes Strömungsquerschnittsregulierelement ausgebildet. Ferner ist bevorzugt, dass das perforierte Strömungsquerschnittsregulierelement ein Drahtnetz aufweist. Damit ist der freie Strömungsquerschnitt im Bereich des Strömungsquerschnittsregulierelement durch die Anzahl, Form und Größe der Perforationen des perforierten Strömungsquerschnittsregulierelements sowie durch die Beschaffenheit, etwa die Lochanzahl und Lochgröße, des Drahtnetzes beeinflussbar.

Die Erfindung ist vorstehend unter Bezugnahme auf eine Düsenanordnung beschrieben worden. In einem weiteren Aspekt betrifft die Erfindung eine Granuliervorrichtung zur Herstellung von Granulat aus einem Schmelzefluss mit einer Düsenanordnung. Die Erfindung löst die eingangs bezeichnete Aufgabe in Bezug auf die Granuliervorrichtung, indem die Düsenanordnung nach einem der obenstehenden Aspekte ausgebildet ist.

In einem weiteren Aspekt betrifft die Erfindung ein Verfahren zum Separieren eines Schmelzeflusses in Schmelzestränge. Die Erfindung löst die eingangs bezeichnete Aufgabe unter Bezugnahme auf ein Verfahren, welches die folgenden Schritte aufweist: Zuführen eines Schmelzeflusses zu einer Düsenanordnung, wobei die Düsenanordnung nach einem der vorstehenden Ausführungsbeispiele ausgebildet ist, Separierung des Schmelzeflusses in Einzelschmelzeflüsse, Druckausgleich zwischen den mehreren Einzelschmelzeflüssen mittels eines Ringkanals und Zuführen des mindestens einen gemeinsamen Schmelzeflusses zu einer Düsenplatte. Bezüglich der Vorteile, die eine solche Granuliervorrichtung bzw. ein solches Verfahren mit sich bringen, sei auf obige Ausführungen verwiesen und selbige hier einbezogen.

Weitere Merkmale und Vorteile der Erfindung ergeben sich aus den beigefügten Ansprüchen und der nachfolgenden Beschreibung, in der Ausführungsbeispiele anhand schematischer Zeichnungen im Einzelnen erläutert werden.

Im Einzelnen zeigen:
- Fig. 1 ein erstes Ausführungsbeispiel einer erfindungsgemäßen Granuliervorrichtung mit einer erfindungsgemäßen Düsenanordnung in einer perspektivischen Darstellung;
- Fig. 2 und 3 das Ausführungsbeispiel der erfindungsgemäßen Düsenanordnung gemäß Fig. 1 in perspektivischen Darstellungen;
- Fig. 4 das Ausführungsbeispiel der erfindungsgemäßen Düsenanordnung gemäß Fig. 1 in einer Schnittdarstellung;
   Geänderte Beschreibungsseiten (Reinschrift)
- Fig. 5 ein zweites Ausführungsbeispiel einer erfindungsgemäßen Düsenanordnung in einer Schnittdarstellung;
- Fig. 6 bis 8 das Ausführungsbeispiel der erfindungsgemäßen Düsenanordnung gemäß Fig. 5 mit unterschiedlich ausgebildeten Strömungsquerschnittsregulierelementen in Schnittdarstellungen;
- Fig. 9 ein drittes Ausführungsbeispiel einer erfindungsgemäßen Düsenanordnung in einer Schnittdarstellung;
- Fig. 10 bis 14 das Ausführungsbeispiel der erfindungsgemäßen Düsenanordnung gemäß Fig. 1 mit unterschiedlich ausgebildeten Strömungsquerschnittsregulierelementen in Schnittdarstellungen; und
- Fig. 15 bis 18 Düsenplatten mit unterschiedlichen Lochkonfigurationen in perspektivischen Darstellungen.

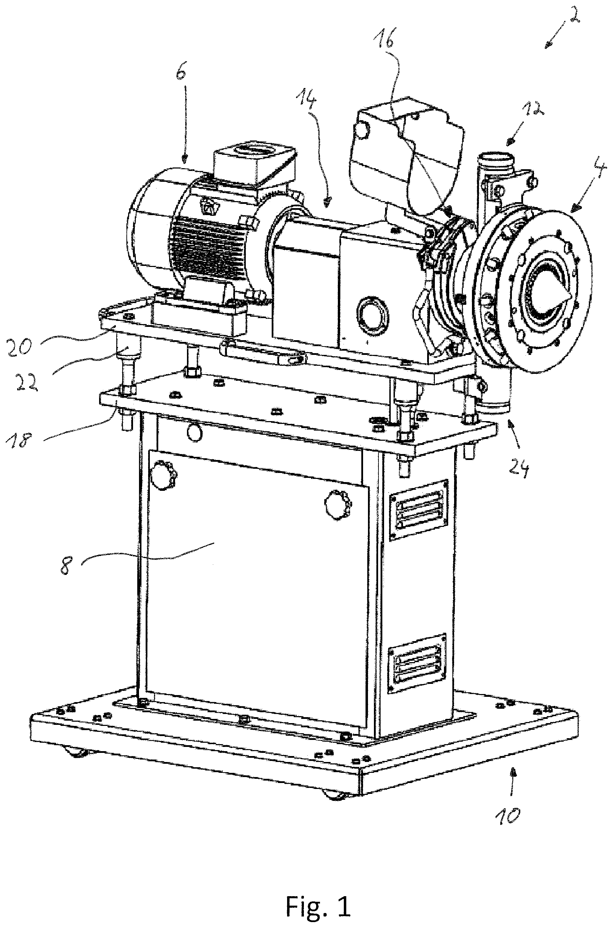

Fig. 1 zeigt eine Granuliervorrichtung 2, welche vorliegend und bevorzugt als Unterwassergranuliervorrichtung ausgebildet ist; allerdings können die erfindungsgemäßen Ausführungsbeispiele auch in anderen Gratuliervorrichtungen oder - verfahren zum Einsatz kommen. Die Granuliervorrichtung 2 weist einen Antrieb 6 auf, welcher einem Unterwassergranulator 14 Antriebsleistung bereitstellt. Dieser Unterwassergranulator 14 ist mittels einer Koppelvorrichtung 16 mit einer Düsenanordnung 4 verbunden.

Der Düsenanordnung 4 wird flüssige Kunststoff - Schmelze typischerweise von einem Extruder (in den Fig. nicht gezeigt) zugeführt. Die Düsenanordnung 4 wird mittels elektrisch oder mittels eines Heizfluids beheizt. Ferner wird Transportfluid für den Granulattransport mittels eines Fluideinlasses 24 in die Düsenanordnung 4 eingebracht und verlässt selbige über einen Fluidauslass 12. Die Schmelze tritt in Form von Schmelzesträngen (in Fig. 1 nicht gezeigt) aus der Düsenanordnung 4 in Richtung des Unterwassergranulators 14 aus und wird zunächst mittels einer Schneidvorrichtung (nicht gezeigt) in Strangabschnitte zerteilt; die Schneidvorrichtung ist vorzugsweise mit rotierenden Schneidmessern ausgebildet. Diese Schmelzestrangabschnitte treten in dem Unterwassergranulator 14 in Kontakt mit einem Kühlfluid, insbesondere Wasser und werden abrupt abgekühlt. Die Schmelzestrangabschnitte bilden infolge dessen Granulatkörner und können im weiteren Prozessverlauf aus dem Wasser als Granulate abgeschieden werden.

Der Antrieb 6 dient insbesondere zum Antrieb der Schneidvorrichtung (nicht gezeigt), welche zum Separieren der Schmelzestränge in Strangabschnitte vorgehalten wird. Die Baugruppe aus Antrieb 6, Unterwassergranulator 14 sowie Düsenanordnung 4 ist auf einem Maschinenträger 20 angeordnet. Dieser wiederum ist mittels der Beabstandungselemente 22 mit einer Grundplatte 18 gekoppelt, welche ihrerseits mit einem Gehäuse 8 verbunden ist. Das Gehäuse 8 wiederum ist auf einem Bodenabschnitt 10, welcher beispielsweise Rollen zur vereinfachten Positionierbarkeit der Granuliervorrichtung aufweist, angeordnet.

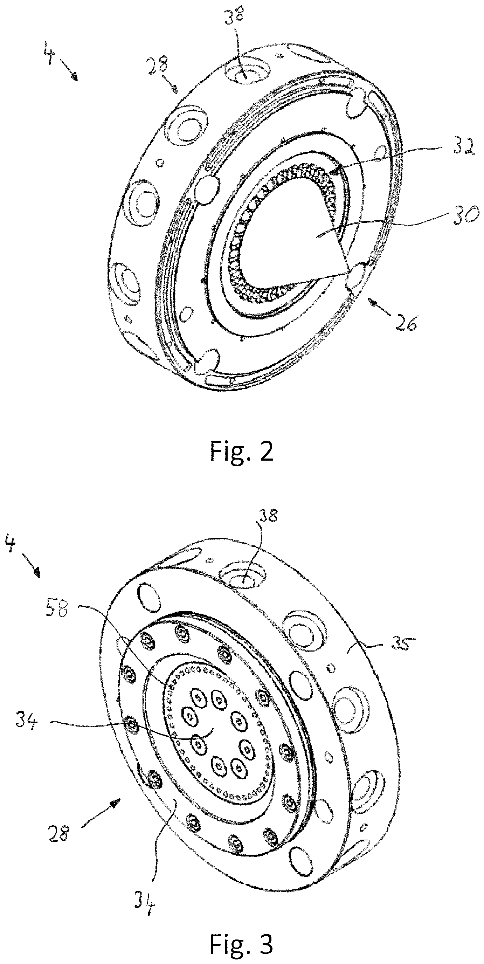

Die Fig. 2 und 3 zeigen die in der Fig. 1 gezeigten Düsenanordnung 4 in einem von der Granuliervorrichtung 2 separierten Zustand. In Fig. 2 ist zunächst die Eintrittsseite 26 der Düsenanordnung 4 gezeigt. An der Eintrittsseite 26 ist ein Leitkonus 30 angeordnet, der im Wesentlichen zur Ausbildung eines ringförmigen Schmelzeflusses aus einem Schmelzefluss, wie er beispielsweise von einer Anfahrventilanordnung (hier nicht gezeigt) bereitgestellt wird, dient. Die Schmelze wird mittels des Leitkonus 30 in Richtung der Strömungskanäle 32 geführt, welche die Eintrittsseite 26 mit der Austrittsseite 28 fluidleitend verbinden. Die Düsenanordnung 4 weist ferner Heizelementaufnahmen 38 auf, die dazu eingerichtet sind, die Düsenanordnung 4 mittels Heizelementen, insbesondere Heizpatronen, zu erwärmen, sodass sichergestellt werden kann, dass die zugeführte Schmelze in der Düsenanordnung 4 nicht unerwünscht aushärtet. Hierbei sei angemerkt, dass ein Beheizen der Düsenanordnung 4 alternativ mittels Heizfluid, mit Dampf oder mit anderen Mitteln vorgenommen werden kann.

Die Austrittsseite 28 der Düsenanordnung 4 ist in Fig. 3 detailliert. Schmelzestränge treten durch die Düsenlöcher 58 der Düsenplatte 34 aus der Düsenanordnung 4 aus, beispielsweise in Richtung einer Schneidvorrichtung eines Unterwassergranulators (vgl. Fig. 1). Die Düsenplatte 34 kann beispielsweise mittels eines Isolierrings 36 an einem Düsenkörper 35 befestigt sein. Ferner sei angemerkt, dass der innere Lochkreis der Düsenplatte 34 im Wesentlichen zur Befestigung derselben an dem Düsenkörper 35 dient.

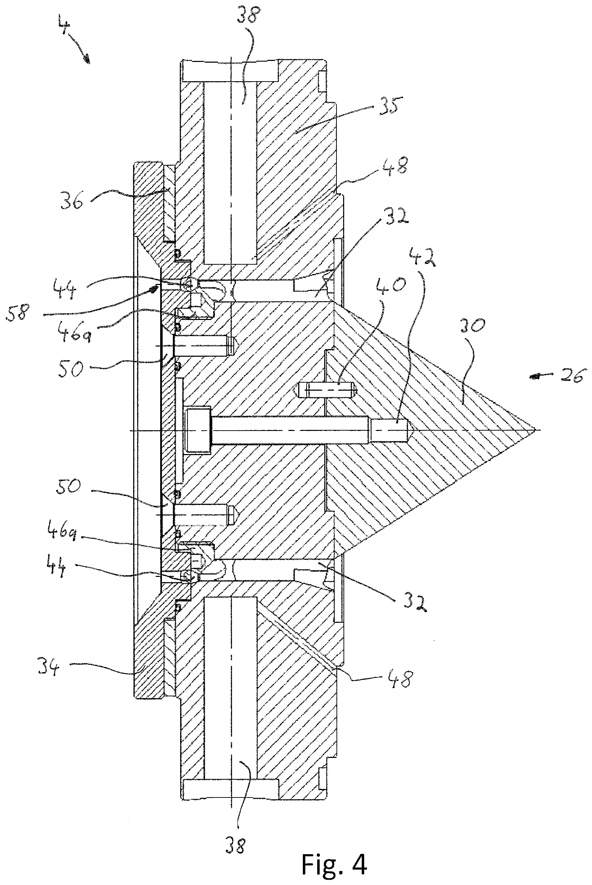

Fig. 4 zeigt eine Schnittansicht der Düsenanordnung 4, wobei die Schnittebene senkrecht zu einer Längsachse der Düsenanordnung 4 verläuft. Die Düsenanordnung 4 weist einen Düsenkörper 35 auf, in welchen Heizelementaufnahmen 38 zur Aufnahme von Heizelementen zur Beheizung der Düsenanordnung 4 angeordnet sind. Zur Erleichterung der Einbringbarkeit eines Heizelementes bzw. einer Heizpatrone in die Heizelementaufnahmen 38 weist der Düsenkörper 35 eine Entlüftungsbohrung 48 auf. In dem Düsenkörper 35 sind ferner Strömungskanäle 32 angeordnet. Diese Strömungskanäle 32 sind auf einem Kreis um die Längsachse der Düsenanordnung 4 angeordnet. Die Zuführkanäle 32 werden durch ein Strömungsquerschnittsregulierelement 46 bereichsweise verengt. Ferner werden die Strömungskanäle 32 mittels eines ringförmigen Verbindungskanals 44 miteinander verbunden. Mit dem ringförmigen Verbindungskanal 44 wiederum verbunden sind die Düsenlöcher 58 der Düsenplatte 34. Der ringförmige Verbindungskanal 44 ermöglicht eine nahezu beliebige Anordnung der Düsenlöcher 58 in einem Bereich der Düsenplatte 34, welcher mit dem Durchmesser des ringförmigen Verbindungskanals 44 korrespondiert.

Die Düsenplatte 34 ist mittels der Befestigungsschrauben 50 an dem Düsenkörper 35 befestigt. Ferner ist zwischen der Düsenplatte 34 und dem Düsenkörper 35 zumindest abschnittsweise ein Isolierring 36 eingebracht. An der Eintrittsseite 26 der Düsenanordnung 4 bzw. des Düsenkörpers 35 ist ein Leitkonus 30 befestigt. Der Leitkonus 30 wird mittels eines Ausrichtstiftes 40 ausgerichtet bzw. zentriert und mittels einer Konusbefestigungsschraube 42 mit dem Düsenkörper 35 verschraubt. Das Strömungsquerschnittsregulierelement 46 wird, wie Fig. 4 entnommen werden kann, von der Düsenplatte 34 in seiner Position gehalten. Für das Strömungsquerschnittsregulierelement 46 stehen verschiedene Varianten zur Verfügung, sodass das Strömungsquerschnittsregulierelement 46 in Abhängigkeit von dem zu verarbeitenden Material bzw. der zu verarbeitenden Schmelze ausgetauscht werden kann. Zum Austausch des Strömungsquerschnittsregulierelements 46 ist vorliegend lediglich die Düsenplatte 34 zu entfernen, womit das Strömungsquerschnittsregulierelement 46 sogleich zugänglich wird und ausgetauscht werden kann.

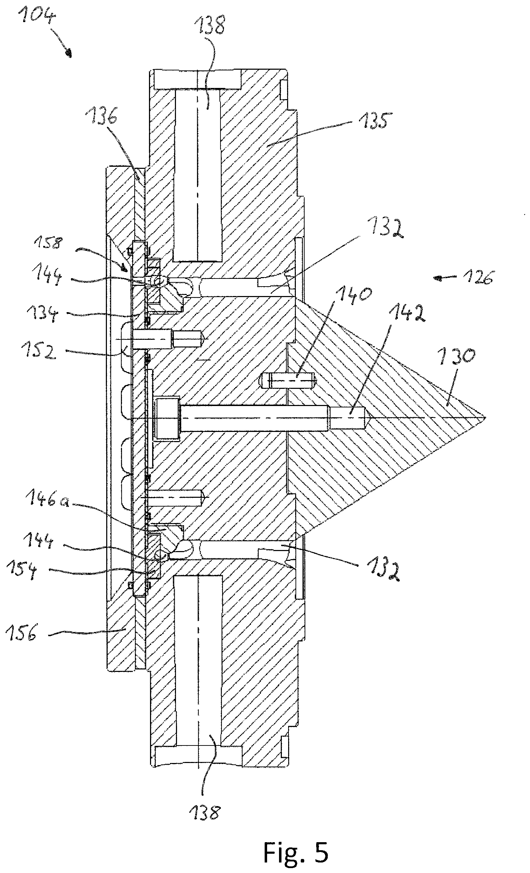

Ein alternatives Ausführungsbeispiel einer Düsenanordnung 104 ist in Fig. 5 gezeigt. Wie bereits aus der Fig. 4 bekannt, weist auch die Düsenanordnung 104 einen Düsenkörper 135 auf, welcher Heizelementaufnahmen 138 aufweist. Ferner ist an dem Düsenkörper 135 mittels Ausrichtstift 140 und Konus-Befestigungsschraube 142 ein Leitkonus 130 befestigt. Darüber hinaus sind in dem Düsenkörper 135 Strömungskanäle 132 ausgebildet. Die Strömungskanäle 132 führen von der Eintrittsseite in Richtung des ringförmigen Verbindungskanals 144. Im Bereich des Strömungskanals 132 ist erneut ein Strömungsquerschnittsregulierelement 146a angeordnet. Dieses weist vorliegend einen gewölbten Abschnitt zur Begrenzung des Strömungskanals 132 auf. Der ringförmige Verbindungskanal 144 wird vorliegend sowohl durch einen Düsenkörper-Wandabschnitt definiert, als auch durch Wandabschnitte, die zu einem Verteilerring 144 bzw. dem Strömungsquerschnittsregulierelement 146a zugehörig sind.

Mit dem ringförmigen Verbindungskanal 144 fluidleitend verbunden ist die Düsenplatte 134. Diese ist mittels der Düsenplattenbefestigungsschraube 152 mit dem Düsenkörper 135 reversibel verbunden. Um die Düsenplatte 134 herum ist ein Isolierring 136 angeordnet. Die Anordnung aus Düsenplatte 134 und Isolierring 136 wird schließlich noch von einem Klemmring 156 in Position gehalten. Erneut korrespondiert der Kreis bzw. Teilkreis, auf welchem die Düsenlöcher 158 in der Düsenplatte 134 angeordnet sind, mit dem Durchmesser des ringförmigen Verbindungskanals 144. Auch ist die Düsenanordnung 104 dazu eingerichtet, dass das Strömungsquerschnittsregulierelement 146a, beispielsweise bei einem Wechsel des zu verarbeitenden Materials bzw. der zu verarbeitenden Schmelze, leicht wechselbar ist. Für einen Wechsel des Strömungsquerschnittsregulierelements 146a ist der Klemmring 156 zu entfernen. Sodann wird die Düsenplatte 134 zugänglich. Nach dem Lösen der Düsenplattenbefestigungsschrauben 152 und dem Entfernen der Düsenplatte 134 inklusive des Verteilerrings 154 wird das Strömungsquerschnittsregulierelement 146a zugänglich und kann sodann gewechselt werden.

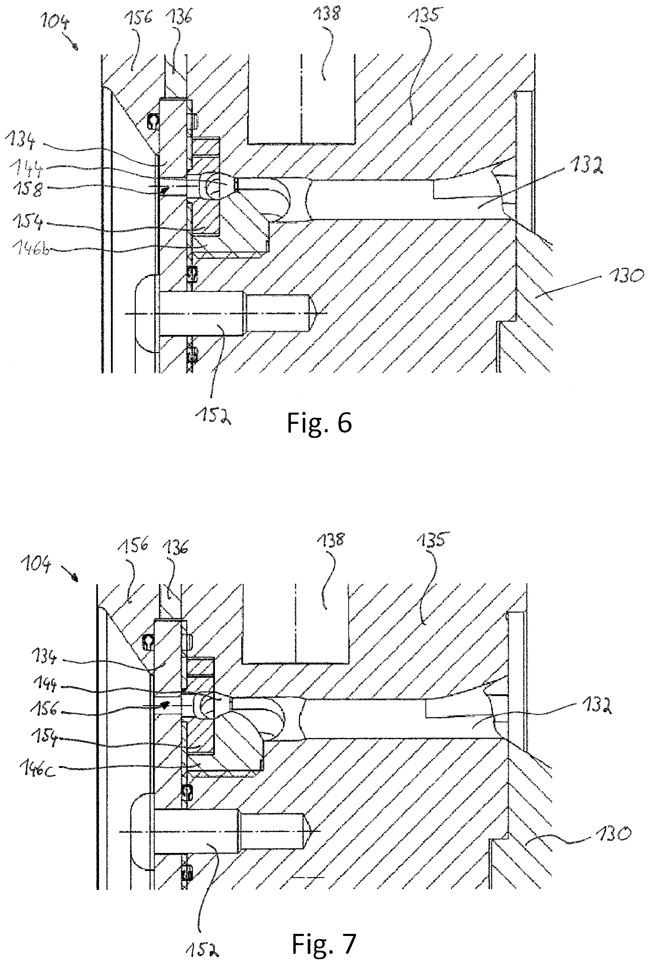

In den Fig. 6 bis 8 sind nun unterschiedliche Strömungsquerschnittsregulierelemente 146a - c in dem Düsenkörper 135 bzw. in dem Strömungskanal 132 angeordnet.

In Fig. 6 weist das Strömungsquerschnittsregulierelement 146b einen abgewinkelten Abschnitt zur Begrenzung des Strömungskanals 132 auf, wohingegen das Strömungsquerschnittsregulierelement 146c in der Fig. 7 einen gewölbten Abschnitt aufweist.

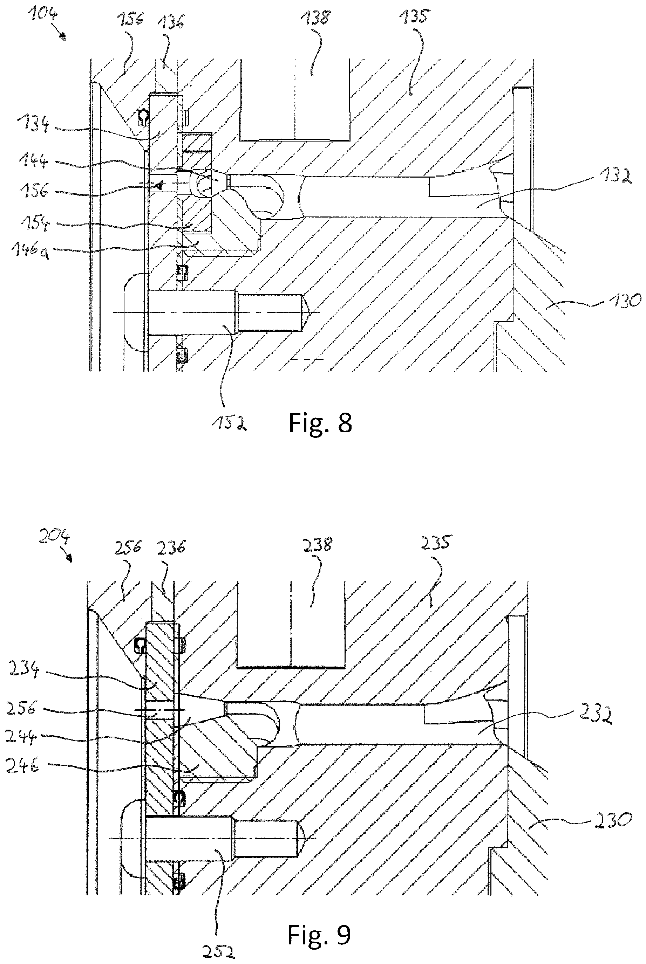

In Fig. 8 weist das Strömungsquerschnittsregulierelement 146a hingegen einen wellenförmigen Abschnitt auf. Mittels der unterschiedlichen Ausgestaltungen der Strömungsquerschnittsregulierelemente 146a-c lässt sich der freie Strömungsquerschnitt des Strömungskanals 132 sowie mittelbar der Druck der Schmelze im Bereich der Düsenplatte 134 in Abhängigkeit vom zu verarbeitenden Material beeinflussen.

Ein alternatives Ausführungsbeispiel einer Düsenanordnung 204 ist in Fig. 9 gezeigt. Im Unterschied zu dem in den Fig. 5 bis 8 gezeigten Ausführungsbeispiel weist die in Fig. 9 gezeigte Düsenanordnung 204 keinen Verteilerring auf, sondern lediglich ein Strömungsquerschnittsregulierelement 246. Der ringförmige Verbindungskanal 244 wird vorliegend definiert durch den Düsenkörper 235, das Strömungsquerschnittsregulierelement 246 sowie - zumindest geringfügig - durch die Düsenplatte 234 selbst. Im Vergleich zu dem Ausführungsbeispiel, welches in den Fig. 5 bis 8 gezeigt ist, ist der konstruktive Aufbau der in Fig. 9 gezeigten Düsenanordnung 204 ansonsten nicht wesentlich verändert.

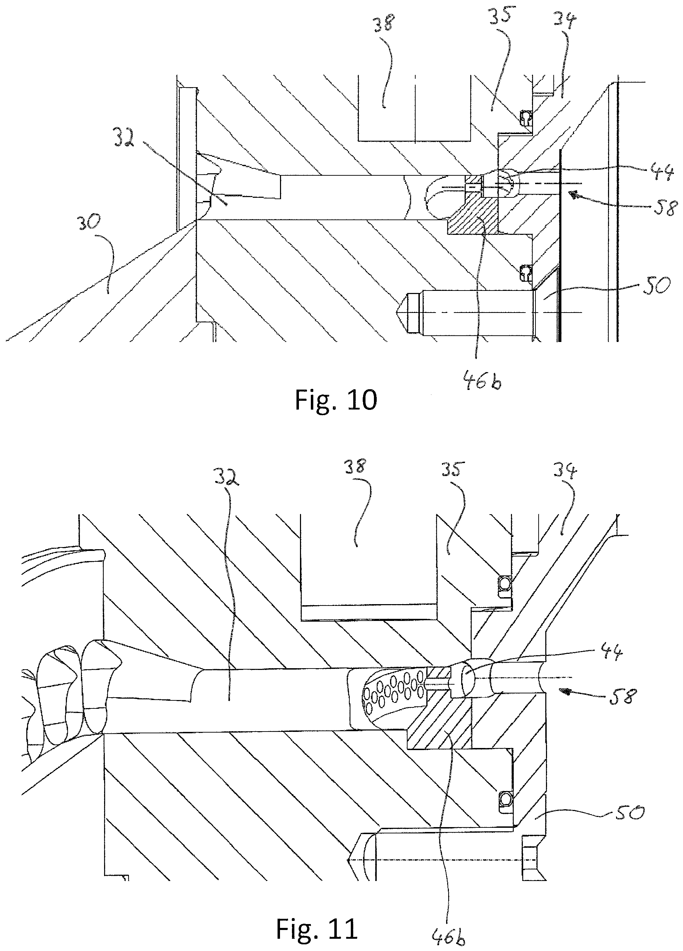

In den Fig. 10 bis 13 ist das Ausführungsbeispiel der erfindungsgemäßen Düsenanordnung 4 gemäß Fig. 1 mit unterschiedlich ausgebildeten Strömungsquerschnittsregulierelementen (46b-c) in Schnittdarstellungen gezeigt. In den Fig. 10 und 11 ist das Strömungsquerschnittsregulierelement 46b als perforiertes Strömungsquerschnittsregulierelement 46b ausgebildet. Der freie Strömungsquerschnitt im Bereich des Strömungsquerschnittsregulierelement 46b wird hierbei durch die Anzahl, Form und Größe der Perforationen des perforierten Strömungsquerschnittsregulierelements 46b beeinflusst.

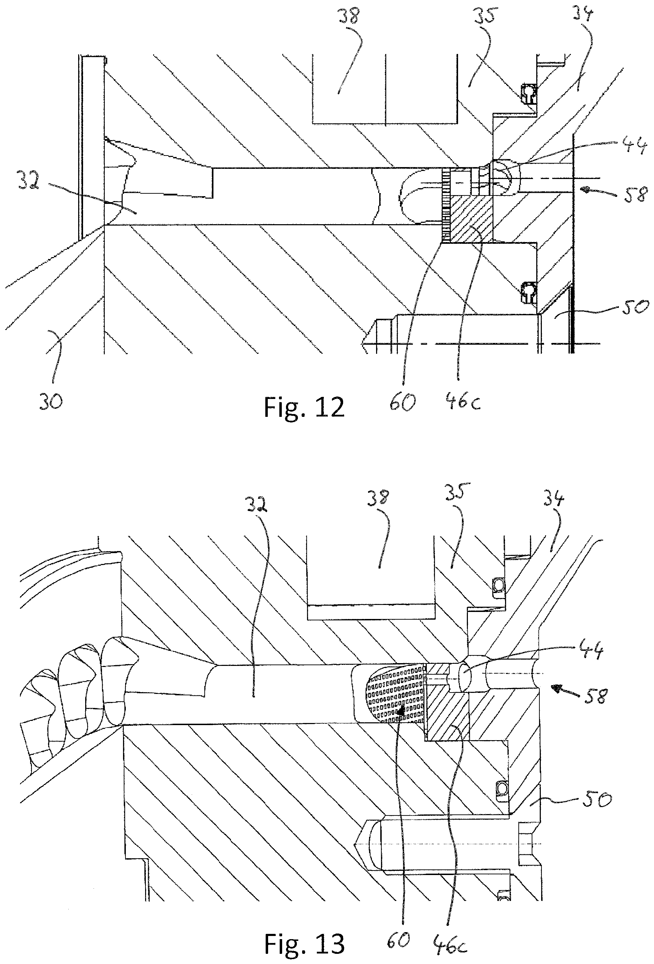

Eine alternatives Ausführungsbeispiel eines Strömungsquerschnittsregulierelements 46c, ausgebildet als perforiertes Strömungsquerschnittsregulierelement 46c mit daran angeordnetem Drahtnetz 60, ist in den Fig. 12 und 13 gezeigt. Das Drahtnetz 60 ist an der dem Leitkonus 30 zugewandten Seite des perforierten Strömungsquerschnittsregulierelement 46c angeordnet. Der freie Strömungsquerschnitt im Bereich des Strömungsquerschnittsregulierelement 46c wird durch die Anzahl, Form und Größe der Perforationen des perforierten Strömungsquerschnittsregulierelements 46c sowie durch die Beschaffenheit, etwa die Lochanzahl und Lochgröße, des Drahtnetzes beeinflusst.

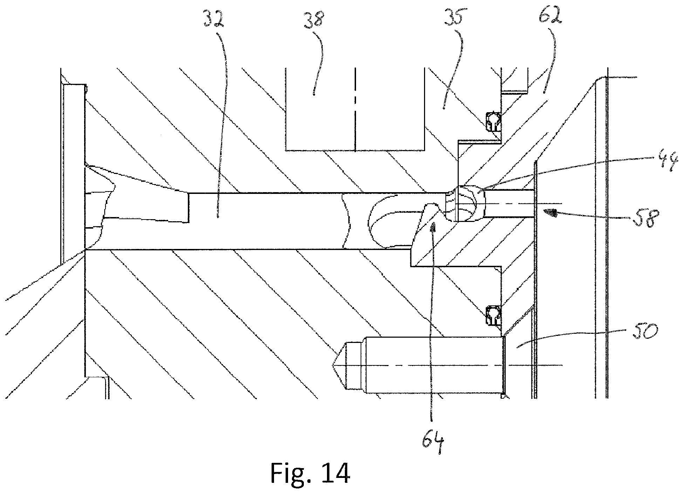

Ein alternatives Ausführungsbeispiel einer Düsenanordnung mit einer Düsenplatte 62 mit angeformtem Strömungsquerschnittsregulierelement 64 ist in Fig. 14 gezeigt. Hierbei ist das Strömungsquerschnittsregulierelement 64 nicht als separates Bauteil ausgeführt, sondern es ist vielmehr Teil der Düsenplatte 62.

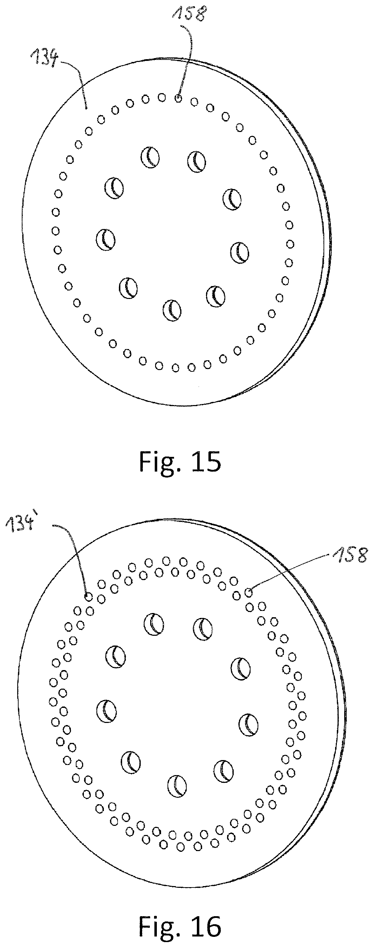

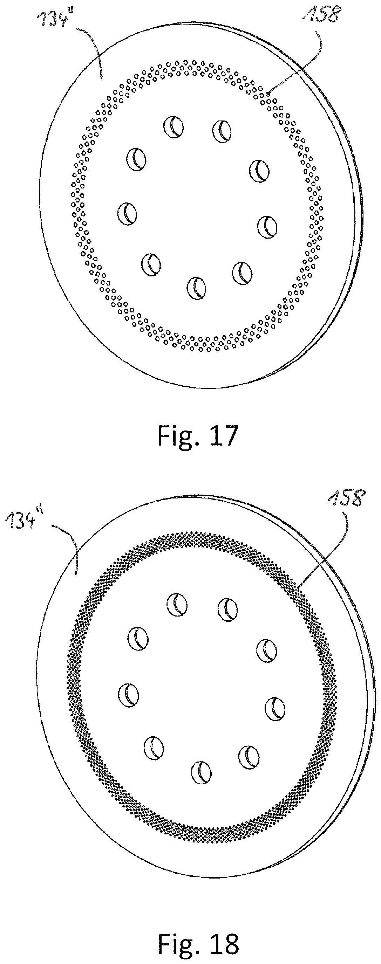

Die Fig. 15 bis 18 zeigen Düsenplatten 134, 134', 134" sowie 134"', wobei sich die Düsenplatten durch Anzahl, Positionierung und Durchmesser der Düsenlöcher 158 unterscheiden. Aus den Fig. 11 bis 13 wird deutlich, dass die Düsenlöcher 158 hinsichtlich Größe, Position und Anzahl auf einem Kreisring um den Mittelpunkt einer Düsenplatte 134 in jenem Bereich im Wesentlichen frei positionierbar sind, welcher mit dem Durchmesser des ringförmigen Verbindungskanals 144 (vgl. beispielsweise Fig. 5) korrespondiert.

### Bezuqszeichenliste

- 2: Granuliervorrichtung
- 4: Düsenanordnung
- 6: Antrieb
- 8: Gehäuse
- 10: Bodenabschnitt
- 12: Fluidauslass
- 14: Unterwassergranulator
- 16: Koppelvorrichtung
- 18: Grundplatte
- 20: Maschinenträger
- 22: Beabstandungselemente
- 24: Fluideinlass
- 26: Eintrittsseite
- 28: Austrittsseite
- 30: Leitkonus
- 32: Strömungskanäle
- 34: Düsenplatte
- 35: Düsenkörper
- 36: Isolierring
- 38: Heizelementaufnahme
- 40: Ausrichtstift
- 42: Konus-Befestigungsschraube
- 44: Ringförmiger Verbindungskanal
- 46 a-c: Strömungsquerschnittsregulierelemente
- 48: Entlüftungsbohrung
- 50: Befestigungsschraube
- 58: Düsenlöcher
- 60: Drahtnetz
- 62: Düsenplatte mit angeformtem Strömungsquerschnittsregulierelement
- 64: Angeformtes Strömungsquerschnittsregulierelement
- 104: Düsenanordnung
- 126: Eintrittsseite
- 130: Leitkonus
- 132: Strömungskanäle
- 134, 134', 134", 134‴: Düsenplatten
- 135: Düsenkörper
- 136: Isolierring
- 138: Heizelementaufnahme
- 140: Ausrichtstift
- 142: Konus-Befestigungsschraube
- 144: Ringförmiger Verbindungskanal
- 146 a-c: Strömungsquerschnittsregulierelemente
- 152: Düsenplattenbefestigungsschraube
- 154: Verteilerring
- 156: Klemmring
- 158: Düsenloch
- 204: Düsenanordnung
- 232: Strömungskanäle
- 234: Düsenplatte
- 235: Düsenkörper
- 236: Isolierring
- 238: Heizelementaufnahme
- 244: Ringförmiger Verbindungskanal
- 246: Strömungsquerschnittsregulierelemente
- 252: Düsenplattenbefestigungsschraube
- 256: Klemmring
- 258: Düsenloch

## Patentansprüche

1. Düsenanordnung (4, 104, 204) für eine Granuliervorrichtung (2), mit
- einem Düsenkörper (35, 135, 235) mit einer Eintrittsseite (26) sowie einer Austrittseite (28),
- einer an der Austrittsseite (28) angeordneten Düsenplatte (34, 134, 234) mit Düsenlöchern (58, 158, 258) zur Ausbildung von Schmelzesträngen,
- in dem Düsenkörper (35, 135, 235) ausgebildete und mit der Eintrittsseite (26) und der Austrittsseite (28) fluidleitend verbundene Strömungskanäle (32, 132, 232) zum Zuführen des Schmelzeflusses zu der Düsenplatte (34, 134, 234), und
mindestens einen zumindest abschnittsweise in dem Düsenkörper (35, 135, 235) ausgebildeten ringförmigen Verbindungskanal (44, 144, 244), welcher mehrere Strömungskanäle (32, 132, 232) austrittsseitig fluidleitend verbindet, und fluidleitend mit den Düsenlöchern (58, 158, 258) der Düsenplatte (34, 134, 234) verbunden ist, **gekennzeichnet durch** mindestens ein Strömungsquerschnittsregulierelement (46, 146, 246), welches in dem mindestens einen Strömungskanal (32, 132, 232) zwischen dem Verbindungskanal (44, 144, 244) und der Düsenplatte (34, 134, 234) angeordnet ist,
wobei das Strömungsquerschnittsregulierelement (46, 146, 246) als Ringelement ausgebildet ist, insbesondere als Drosselringelement.

2. Düsenanordnung (4, 104, 204) nach Anspruch 1,
**dadurch gekennzeichnet, dass** der Verbindungskanal (44, 144, 244) einen im Wesentlichen runden Querschnitt aufweist.

3. Düsenanordnung (4, 104, 204) nach einem der vorherigen Ansprüche,
**dadurch gekennzeichnet, dass** der Durchmesser des Verbindungskanals (44, 144, 244) mit einem Düsenlochkreisdurchmesser der Düsenplatte (34, 134, 234) korrespondiert.

4. Düsenanordnung (4, 104, 204) nach einem der vorherigen Ansprüche ,
**dadurch gekennzeichnet, dass** das Strömungsquerschnittsregulierelement (64) einstückig an der Düsenplatte (62) ausgebildet ist.

5. Düsenanordnung (4, 104, 204) nach einem der Ansprüche 2 bis 3,
**dadurch gekennzeichnet, dass** das Strömungsquerschnittsregulierelement (46, 146, 246) als separates Bauteil ausgebildet ist.

6. Düsenanordnung (4, 104, 204) nach einem der vorherigen Ansprüche ,
**dadurch gekennzeichnet, dass** das Strömungsquerschnittsregulierelement (46, 146, 246) austauschbar in dem Strömungskanal (32, 132, 232) angeordnet ist.

7. Düsenanordnung (4, 104, 204) nach einem der vorherigen Ansprüche,
**dadurch gekennzeichnet, dass** das Strömungsquerschnittsregulierelement (46, 146, 246) wenigstens teilweise in oder angrenzend zu dem Verbindungskanal (44, 144, 244) angeordnet ist.

8. Düsenanordnung (4, 104, 204) nach einem der vorherigen Ansprüche,
**dadurch gekennzeichnet, dass** das Strömungsquerschnittsregulierelement (46, 146, 246) durch die Düsenplatte (34, 134, 234) in seiner Position gehalten wird und nach dem Entfernen der Düsenplatte (34, 134, 234) zugänglich ist.

9. Düsenanordnung (4, 104, 204) nach einem der vorherigen Ansprüche,
**dadurch gekennzeichnet, dass** an dem Strömungsquerschnittsregulierelement (46, 146, 246) eine Staukante ausgebildet ist.

10. Düsenanordnung (4, 104, 204) nach einem der vorherigen Ansprüche,
**dadurch gekennzeichnet, dass** an dem Strömungsquerschnittsregulierelement (46, 146, 246) zumindest ein Abschnitt des Verbindungskanals (44, 144, 244) ausgebildet ist.

11. Düsenanordnung (4, 104, 204) nach einem der vorherigen Ansprüche, **gekennzeichnet durch** einen zwischen der Düsenplatte (134) und dem Strömungsquerschnittsregulierelement (146) angeordneten Verteilerring (154), an welchem vorzugsweise ein Abschnitt des Verbindungskanals ausgebildet ist.

12. Düsenanordnung (4, 104, 204) nach einem der vorherigen Ansprüche,
**dadurch gekennzeichnet, dass** das Strömungsquerschnittsregulierelement (46, 146, 246) einen konischen Abschnitt zur Begrenzung des Strömungskanals (32, 132, 232) aufweist.

13. Düsenanordnung (4, 104, 204) nach einem der vorherigen Ansprüche,
**dadurch gekennzeichnet, dass** das Strömungsquerschnittsregulierelement (46, 146, 246) einen gewölbten Abschnitt zur Begrenzung des Strömungskanals (32, 132, 232) aufweist.

14. Düsenanordnung (4, 104, 204) nach einem der vorherigen Ansprüche,
**dadurch gekennzeichnet, dass** das Strömungsquerschnittsregulierelement (46, 146, 246) einen konkaven Abschnitt zur Begrenzung (32, 132, 232) des Strömungskanals aufweist.

15. Düsenanordnung (4, 104, 204) nach einem der vorherigen Ansprüche,
**dadurch gekennzeichnet, dass** das Strömungsquerschnittsregulierelement (46b) als perforiertes Strömungsquerschnittsregulierelement (46b) ausgebildet ist.

16. Düsenanordnung (4, 104, 204) nach Anspruch 15,
**dadurch gekennzeichnet, dass** das perforierte Strömungsquerschnittsregulierelement (46b) ein Drahtnetz (60) aufweist.

17. Granuliervorrichtung (2) zur Herstellung von Granulat aus einem Schmelzefluss, mit einer Düsenanordnung (4, 104, 204),
**dadurch gekennzeichnet, dass** die Düsenanordnung (4, 104, 204) nach einem der Ansprüche 1 bis 16 ausgebildet ist.

18. Verfahren zum Separieren eines Schmelzeflusses in Schmelzestränge, mindestens aufweisend die Schritte:
- Zuführen eines Schmelzeflusses zu einer Düsenanordnung (4, 104, 204), wobei die Düsenanordnung (4, 104, 204) nach einem der Ansprüche 1-16 ausgebildet ist;
- Separierung des Schmelzeflusses in Einzelschmelzeflüsse;
- Druckausgleich zwischen den mehreren Einzelschmelzeflüsse mittels eines Ringkanals (44, 144, 244); und
- Zuführen des mindestens einen gemeinsamen Schmelzeflusses zu einer Düsenplatte (34, 134, 234).

## Claims

1. Nozzle assembly (4, 104, 204) for a granulating device (2), having
- a nozzle body (35, 135, 235) with an inlet side (26) and also an outlet side (28),
- a nozzle plate (34, 134, 234) with nozzle holes (58, 158, 258) which is disposed on the outlet side (28) for the formation of melt strands,
- flow channels (32, 132, 232), which are configured in the nozzle body (35, 135, 235) and are connected in a fluid-conducting manner to the inlet side (26) and to the outlet side (28) for supplying the melt flow to the nozzle plate (34, 134, 234), and
at least one annular connection channel (44, 144, 244) which is configured at least in portions in the nozzle body (35, 135, 235) and connects a plurality of flow channels (32, 132, 232) in a fluid-conducting manner on the outlet side and is connected in a fluid-conducting manner to the nozzle holes (58, 158, 258) of the nozzle plate (34, 134, 234),
**characterised by** at least one flow cross-section regulating element (46, 146, 246) which is disposed in the at least one flow channel (32, 132, 232) between the connection channel (44, 144, 244) and the nozzle plate (34, 134, 234),
the flow cross-section regulating element (46, 146, 246) being configured as ring element, in particular as throttle ring element.

2. Nozzle assembly (4, 104, 204) according to claim 1,
**characterised in that** the connection channel (44, 144, 244) has an essentially round cross-section.

3. Nozzle assembly (4, 104, 204) according to one of the preceding claims,
**characterised in that** the diameter of the connection channel (44, 144, 244) corresponds to a nozzle hole circular diameter of the nozzle plate (34, 134, 234).

4. Nozzle assembly (4, 104, 204) according to one of the preceding claims,
**characterised in that** the flow cross-section regulating element (64) is configured in one-piece on the nozzle plate (62).

5. Nozzle assembly (4, 104, 204) according to one of claims 2 to 3,
**characterised in that** the flow cross-section regulating element (46, 146, 246) is configured as separate component.

6. Nozzle assembly (4, 104, 204) according to one of the preceding claims,
**characterised in that** the flow cross-section regulating element (46, 146, 246) is disposed exchangeably in the flow channel (32, 132, 232).

7. Nozzle assembly (4, 104, 204) according to one of the preceding claims,
**characterised in that** the flow cross-section regulating element (46, 146, 246) is disposed at least partially in or adjacent to the connection channel (44, 144, 244).

8. Nozzle assembly (4, 104, 204) according to one of the preceding claims,
**characterised in that** the flow cross-section regulating element (46, 146, 246) is retained in its position by the nozzle plate (34, 134, 234) and is accessible after removal of the nozzle plate (34, 134, 234).

9. Nozzle assembly (4, 104, 204) according to one of the preceding claims,
**characterised in that** a dam edge is configured on the flow cross-section regulating element (46, 146, 246).

10. Nozzle assembly (4, 104, 204) according to one of the preceding claims,
**characterised in that** at least a portion of the connection channel (44, 144, 244) is configured on the flow cross-section regulating element (46, 146, 246).

11. Nozzle assembly (4, 104, 204) according to one of the preceding claims,
**characterised by** a distribution ring (154) which is disposed between the nozzle plate (134) and the flow cross-section regulating element (146), and on which preferably a portion of the connection channel is configured.

12. Nozzle assembly (4, 104, 204) according to one of the preceding claims,
**characterised in that** the flow cross-section regulating element (46, 146, 246) has a conical portion for delimitation of the flow channel (32, 132, 232).

13. Nozzle assembly (4, 104, 204) according to one of the preceding claims,
**characterised in that** the flow cross-section regulating element (46, 146, 246) has an arched portion for delimitation of the flow channel (32, 132, 232).

14. Nozzle assembly (4, 104, 204) according to one of the preceding claims,
**characterised in that** the flow cross-section regulating element (46, 146, 246) has a concave portion for delimitation (32, 132, 232) of the flow channel.

15. Nozzle assembly (4, 104, 204) according to one of the preceding claims,
**characterised in that** the flow cross-section regulating element (46b) is configured as perforated flow cross-section regulating element (46b).

16. Nozzle assembly (4, 104, 204) according to claim 15,
**characterised in that** the perforated flow cross-section regulating element (46b) has a wire net (60).

17. Granulating device (2) for producing granulate from a melt flow, having a nozzle assembly (4, 104, 204),
**characterised in that** the nozzle assembly (4, 104, 204) is configured according to one of claims 1 to 16.

18. Method for separating a melt flow into melt strands, at least having the steps:
- supplying a melt flow to a nozzle assembly (4, 104, 204), the nozzle assembly (4, 104, 204) being configured according to one of claims 1 - 16;
- separating the melt flow into individual melt flows;
- pressure equalisation between the plurality of individual melt flows by means of a ring channel (44, 144, 244); and
- supplying the at least one common melt flow to a nozzle plate (34, 134, 234).

## Revendications

1. Dispositif de buse (4, 104, 204) pour un dispositif de granulation (2), avec
- un corps de buse (35, 135, 235) avec un côté d'entrée (26) ainsi qu'un côté de sortie (28),
- une plaque de buse (34, 134, 234) agencée au niveau du côté de sortie (28) avec des trous de buse (58, 158, 258) pour la réalisation de barres de fusion,
- des canaux d'écoulement (32, 132, 232) réalisés dans le corps de buse (35, 135, 235) et reliés de manière à acheminer le fluide au côté d'entrée (26) et au côté de sortie (28) pour la fourniture du flux de fusion à la plaque de buse (34, 134, 234), et
au moins un canal de liaison (44, 144, 244) annulaire réalisé au moins par sections dans le corps de buse (35, 135, 235) qui relie de manière à acheminer le fluide côté sortie plusieurs canaux d'écoulement (32, 132, 232), et est relié de manière à acheminer le fluide aux trous de buse (58, 158, 258) de la plaque de buse (34, 134, 234),
**caractérisé par** au moins un élément de régulation de section transversale d'écoulement (46, 146, 246) qui est agencé dans l'au moins un canal d'écoulement (32, 132, 232) entre le canal de liaison (44, 144, 244) et la plaque de base (34, 134, 234),
dans lequel l'élément de régulation de section transversale d'écoulement (46, 146, 246) est réalisé comme élément annulaire, en particulier comme élément annulaire d'étranglement.

2. Agencement de buse (4, 104, 204) selon la revendication 1,
**caractérisé en ce que** le canal de liaison (44, 144, 244) présente une section transversale sensiblement ronde.

3. Agencement de buse (4, 104, 204) selon l'une quelconque des revendications précédentes,
**caractérisé en ce que** le diamètre du canal de liaison (44, 144, 244) correspond à un diamètre circulaire de trou de buse de la plaque de buse (34, 134, 234).

4. Agencement de buse (4, 104, 204) selon l'une quelconque des revendications précédentes,
**caractérisé en ce que** l'élément de régulation de section transversale d'écoulement (64) est réalisé d'un seul tenant au niveau de la plaque de buse (62).

5. Agencement de buse (4, 104, 204) selon l'une quelconque des revendications 2 à 3,
**caractérisé en ce que** l'élément de régulation de section transversale d'écoulement (46, 146, 246) est réalisé comme composant séparé.

6. Agencement de buse (4, 104, 204) selon l'une quelconque des revendications précédentes,
**caractérisé en ce que** l'élément de régulation de section transversale d'écoulement (46, 146, 246) est agencé de manière interchangeable dans le canal d'écoulement (32, 132, 232).

7. Agencement de buse (4, 104, 204) selon l'une quelconque des revendications précédentes,
**caractérisé en ce que** l'élément de régulation de section transversale d'écoulement (46, 146, 246) est agencé au moins partiellement dans ou de manière contiguë au canal de liaison (44, 144, 244).

8. Agencement de buse (4, 104, 204) selon l'une quelconque des revendications précédentes,
**caractérisé en ce que** l'élément de régulation de section transversale d'écoulement (46, 146, 246) est maintenu par la plaque de buse (34, 134, 234) dans sa position et est accessible après le retrait de la plaque de buse (34, 134, 234).

9. Agencement de buse (4, 104, 204) selon l'une quelconque des revendications précédentes,
**caractérisé en ce qu'**un bord d'accumulation est réalisé au niveau de l'élément de régulation de section transversale d'écoulement (46, 146, 246).

10. Agencement de buse (4, 104, 204) selon l'une quelconque des revendications précédentes,
**caractérisé en ce qu'**au moins une section du canal de liaison (44, 144, 244) est réalisée au niveau de l'élément de régulation de section transversale d'écoulement (46, 146, 246).

11. Agencement de buse (4, 104, 204) selon l'une quelconque des revendications précédentes,
**caractérisé par** un anneau de distribution (154) agencé entre la plaque de buse (134) et l'élément de régulation de section transversale d'écoulement (146), au niveau duquel une section du canal de liaison est de préférence réalisée.

12. Agencement de buse (4, 104, 204) selon l'une quelconque des revendications précédentes,
**caractérisé en ce que** l'élément de régulation de section transversale d'écoulement (46, 146, 246) présente une section conique pour la limitation du canal d'écoulement (32, 132, 232).

13. Agencement de buse (4, 104, 204) selon l'une quelconque des revendications précédentes,
**caractérisé en ce que** l'élément de régulation de section transversale d'écoulement (46, 146, 246) présente une section cintrée pour la limitation du canal d'écoulement (32, 132, 232).

14. Agencement de buse (4, 104, 204) selon l'une quelconque des revendications précédentes,
**caractérisé en ce que** l'élément de régulation de section transversale d'écoulement (46, 146, 246) présente une section concave pour la limitation (32, 132, 232) du canal d'écoulement.

15. Agencement de buse (4, 104, 204) selon l'une quelconque des revendications précédentes,
**caractérisé en ce que** l'élément de régulation de section transversale d'écoulement (46b) est réalisé comme élément de régulation de section transversale d'écoulement (46b) perforé.

16. Agencement de buse (4, 104, 204) selon la revendication 15,
**caractérisé en ce que** l'élément de régulation de section transversale d'écoulement (46b) perforé présente un treillis de fils (60).

17. Dispositif de granulation (2) pour la fabrication de granulat à partir d'un flux de fusion, avec un agencement de buse (4, 104, 204),
**caractérisé en ce que** le dispositif de buse (4, 104, 204) est réalisé selon l'une quelconque des revendications 1 à 16.

18. Procédé de séparation d'un flux de fusion en barres de fusion, présentant au moins les étapes :
- la fourniture d'un flux de fusion à un dispositif de buse (4, 104, 204), dans lequel le dispositif de buse (4, 104, 204) est réalisé selon l'une quelconque des revendications 1 à 16 ;
- la séparation du flux de fusion en flux de fusion individuels ;
- la compensation de pression entre les plusieurs flux de fusion individuels au moyen d'un canal annulaire (44, 144, 244) ; et
- la fourniture d'au moins un flux de fusion commun à une plaque de buse (34, 134, 234).
